# EUROPÄISCHE PATENTSCHRIFT

(11) **EP 3 353 416 B1**
(45) Veröffentlichungstag und Bekanntmachung des Hinweises auf die Patenterteilung: **03.03.2021**
(21) Anmeldenummer: 16750651.8
(22) Anmeldetag: 25.07.2016
(51) Int. Cl.: F02M 65/00, F02M 63/02, F16M 1/00

(54) **INJEKTORPRÜFVORRICHTUNG**
INJECTOR TEST DEVICE
DISPOSITIF DE CONTRÔLE D'INJECTEUR

(30) Priorität: 21.09.2015 DE 102015218102
(43) Veröffentlichungstag der Anmeldung: 01.08.2018
(73) Patentinhaber: Robert Bosch GmbH, 70442 Stuttgart (DE)
(72) Erfinder: BATHA, Armin, 73773 Aichwald (DE); HOSS, Reinhard, 73207 Plochingen (DE); STRACK, Daniel, 73066 Uhingen (DE)
(86) Internationale Anmeldenummer: PCT/EP2016/067668
(87) Internationale Veröffentlichungsnummer: WO 2017/050462

(56) Entgegenhaltungen:
- CN-A- 1 975 148
- DE-A1-102010 038 760
- DE-A1-102011 075 485
- KR-A- 20120 084 890
- US-A1- 2013 031 775

## Beschreibung

Die Erfindung betriffft eine Injektorprüfvorrichtung.

Zum Prüfen von Injektoren in einer Injektorprüfvorrichtung wird ein Prüföl von einer Hochdruckpumpe ("Common Rail Pumpe") auf den benötigten Druck gebracht und einem Druckspeicher bzw. Hochdruckrail zugeführt. Vom Druckspeicher bzw. Hochdruckrail wird das Prüföl auf die zu prüfenden Injektoren verteilt.

Je nach Konstruktionstyp des zu prüfenden Injektors müssen dabei unterschiedliche Verbindungsleitungen, insbesondere Hochdruckschläuche, verwendet werden, um den Injektor mit dem Druckspeicher bzw. Hochdruckrail zu verbinden.

Die Verwendung flexibler Verbindungsleitungen, insbesondere von Verbindungsleitungen verschiedener Hersteller, können die Messergebnisse beeinflussen, so dass eine Abhängigkeit von einem einzigen bzw. wenigen Herstellern entstehen kann. Selbst wenn Hochdruckschläuche eines einzigen Herstellers verwendet werden, können die Messergebnisse aufgrund von Fertigungstoleranzen schwanken.

*In der* US 2013/00331775A1 ist Apparat mit einer Druckkammer gezeigt, welcher es ermöglicht einen Injektor mit einer Testvorrichtung zu verbinden. Weitere Apparate zum Testen von Injektoren sind in den Schriften US Pat. No. 7,878,050 und US Pat. No. 7,975,535 gezeigt.

Es ist daher wünschenswert, die Anbindung der zu prüfenden Injektoren an das Hochdruckrail zu verbessern, um die Konstanz der Messergebnisse zu erhöhen.

Gemäß der Erfindung umfasst eine Injektorprüfvorrichtung eine Fluidpumpe, die ausgebildet ist, ein Prüföl zu fördern; einen Motor, der mechanisch mit der Fluidpumpe verbunden und ausgebildet ist, die Fluidpumpe anzutreiben; wenigstens eine Injektor-Halterung zu Aufnahme wenigstens eines zu prüfenden Injektors; und ein Rail, das zur Aufnahme des von der Fluidpumpe geförderten Prüföls und zur Fluidverbindung mit wenigstens einem zu prüfenden Injektor ausgebildet ist. Dabei ist das Rail so gelagert, dass es gegenüber der Injektor-Halterung schwenkbar ist. Auf diese Weise können die Position und die räumliche Ausrichtung des Rails auf den Fluidanschluss (Druckrohrstutzen) des zu prüfenden Injektors ausgerichtet werden.

Das Rail ist insbesondere mit wenigstens einem starren Anschlussstutzen zum Anschließen wenigstens eines zu prüfenden Injektors ausgebildet.

Auf diese Weise kann das Rail durch einen starren Anschlussstutzen mit dem Druckrohrstutzen eines zu prüfenden Injektors verbunden werden. Auf die Verwendung unterschiedlicher Hochdruckanschlüsse und flexibler Hochdruckschläuche kann daher verzichtet werden.

Die Handhabung wird vereinfacht und es sind nur geringe Umbauarbeiten notwendig, um mit einer einzigen Injektorprüfvorrichtung verschiedenen Arten von Injektoren prüfen zu können. Da starre Anschlussstutzen weniger verschleißanfällig als flexible Hochdruckschläuche sind, kann die Ausfallrate reduziert und die Betriebssicherheit erhöht werden. Da starre Anschlussstutzen geringere Fertigungstoleranzen als flexible Hochdruckschläuche aufweisen, kann die Genauigkeit erhöht und insbesondere die Reproduzierbarkeit der Messergebnisse verbessert werden.

Die Anschlussstutzen können durch spanende Bearbeitung gefertigt werden und in gleichbleibender Qualität und Ausführung von verschiedenen Lieferanten bezogen werden. Eine Abhängigkeit von einem oder wenigen Lieferanten kann daher vermieden werden.

In einer Ausführungsform ist das Rail um eine horizontale Achse schwenkbar gelagert, so dass die Orientierung des Rails besonders effektiv an die Geometrie von Injektoren, die zu Prüfzwecken vorzugsweise senkrecht angeordnet sind, angepasst werden kann.

Gemäß der Erfindung sind die Fluidpumpe und der Motor derart gelagert, dass sie gemeinsam mit dem Rail schwenkbar sind. Die Fluidpumpe und das Rail können so durch eine starre Fluidleitung miteinander verbunden werden. Auf diese Weise kann auch an dieser Stelle auf den Einsatz eines flexiblen Hochdruckschlauches verzichtet werden.

In einer Ausführungsform sind die Fluidpumpe, der Motor und das Rail als gemeinsame Baugruppe elastisch, insbesondere über einen elastischen Puffer/Gummipuffer, auf einem Gestell der Injektorprüfvorrichtung gelagert. Dadurch, dass die Fluidpumpe und das Rail als gemeinsame Baugruppe elastisch gelagert sind, treten im Betrieb keine Relativbewegungen zwischen der Fluidpumpe und dem Rail auf. Es können daher starre Fluidleitungen, insbesondere Stahlleitungen, verwendet werden, um die Fluidpumpe mit dem Rail zu verbinden.

In einer Ausführungsform umfasst die Baugruppe einen Rahmen und/oder eine Wanne, insbesondere eine Ölwanne, wobei der Rahmen bzw. die Wanne elastisch auf einem Gestell der Injektorprüfvorrichtung gelagert ist. Mit Hilfe eines Rahmens und/oder einer Wanne können das Rail, der Motor und die Pumpe besonders effektiv gemeinsam elastisch gelagert werden.

In einer Ausführungsform ist die wenigstens eine Injektor-Halterung in wenigstens einer Richtung, insbesondere in allen drei Raumrichtungen, verschiebbar. Dadurch kann ein zu prüfender Injektor optimal auf den Anschlussstutzen des Rails ausgerichtet werden, und in der Folge kann auf eine flexible Fluidverbindung zwischen dem Rail und dem Injektor verzichtet werden.

In einer Ausführungsform umfasst die wenigstens eine Injektor-Halterung eine Klemmvorrichtung zum Festklemmen eines zu prüfenden Injektors. Mit Hilfe einer Klemmvorrichtung kann ein zu prüfender Injektor schnell, sicher und effektiv in der Aufspannvorrichtung fixiert werden.

In einer Ausführungsform umfasst die wenigstens eine Injektor-Halterung eine Spindel, einen Konus und einen Klemmring, die derart ausgebildet sind, dass der Klemmring durch Drehen der Spindel aufweitbar ist, um die Injektor-Halterung verspannungsfrei in einem Rohr der Injektorprüfvorrichtung zu fixieren.

### Kurze Beschreibung der Figuren:

Figur 1 zeigt eine perspektivische Frontansicht einer Injektorprüfvorrichtung mit einer Baugruppe gemäß einem Ausführungsbeispiel der Erfindung.
Figuren 2a und 2b zeigen perspektivische Ansichten der funktionalen Elemente der in Figur 1 gezeigten Injektorprüfvorrichtung aus zwei verschiedenen Winkeln.
Figuren 3a bis 3c zeigen verschiedene Ansichten einer Injektor-Halterung, wie sie in einem Ausführungsbeispiel der Erfindung einsetzbar ist, mit einem darin eingeklemmtem Injektor.
Figur 4 zeigt eine perspektivische Frontansicht einer Baugruppe gemäß einem weiteren Ausführungsbeispiel der Erfindung.

### Figurenbeschreibung:

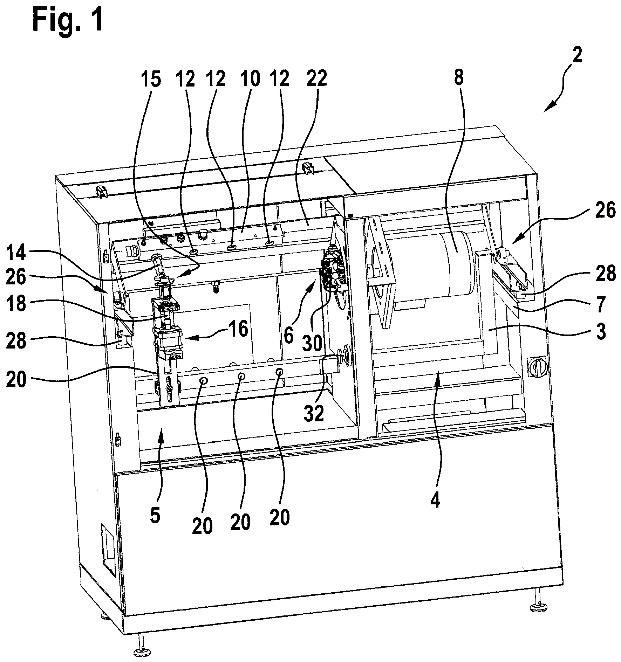

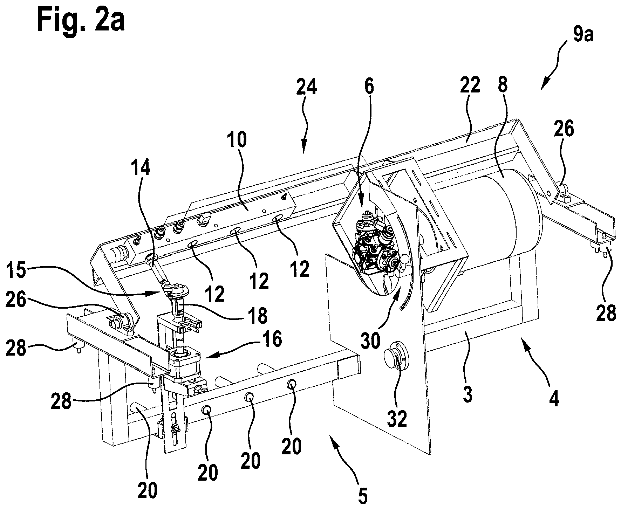

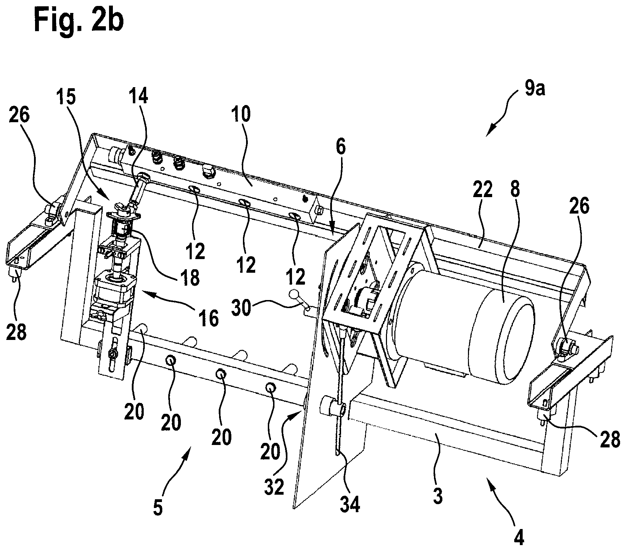

Figur 1 zeigt eine perspektivische Frontansicht einer Injektorprüfvorrichtung 2 mit einer Baugruppe 9a gemäß einem Ausführungsbeispiel der Erfindung. Die Figuren 2a und 2b zeigen perspektivische Ansichten der Baugruppe 9a, welche die funktionalen Elemente der Injektorprüfvorrichtung 2 umfasst, aus zwei verschiedenen Winkeln.

Die Injektorprüfvorrichtung 2 umfasst einen in den Figur 1, 2a und 2b jeweils rechts dargestellten Druckerzeugungsbereich 4 und einen jeweils links dargestellten Prüfbereich 5.

Die Injektorprüfvorrichtung 2 hat einen Tragrahmen 3, der eine Fluidpumpe (Hochdruckpumpe) 6 und einen zum Antreiben der Fluidpumpe 6 ausgebildeten Motor 8 trägt.

Ein schwenkbarer Rahmen 22 ist durch zwei Stehlager 26 derart auf dem Tragrahmen 3 abgestützt, dass er um eine horizontale Achse schwenkbar ist. Dies ermöglicht es, den schwenkbaren Rahmen 22 in einem beliebigen Winkel um die horizontale Achse von der Horizontalen bis in die Lotrechte einzustellen. Der schwenkbare Rahmen 22 kann mittels eines Klemmhebels 30 in jeder gewünschten Position fixiert werden. Alternativ oder zusätzlich kann die gewünschte Position gesichert werden, indem eine Zahn- oder Gewindestange 34, die am schwenkbaren Rahmen 3 befestigt ist, in einem Betätigungsknopf 32 eingerastet wird.

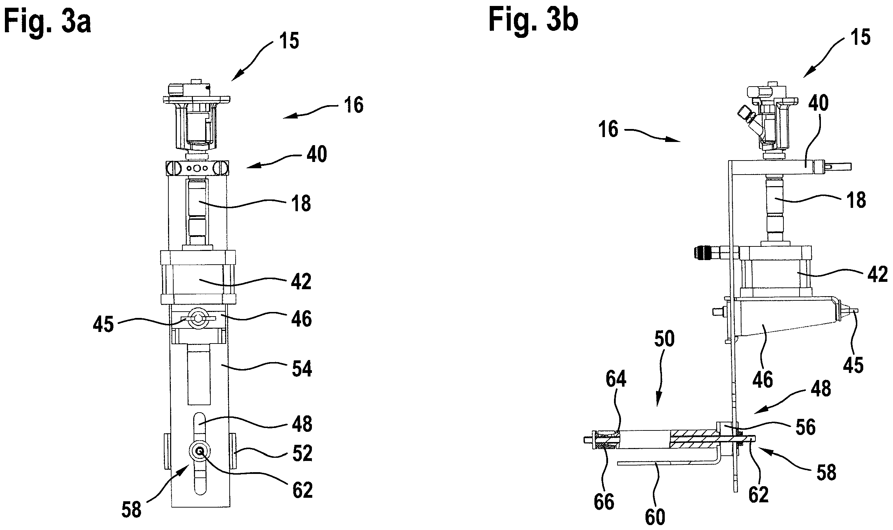

Der schwenkbare Rahmen 22 trägt einen in Form eines Rails 10 ausgebildeten Hochdruckspeicher, der durch mehrere Fluidleitungen 24 mit der Ausgangsseite der Fluidpumpe 6 verbunden und zur Aufnahme des von der Fluidpumpe 6 geförderten Fluids ausgebildet ist. Das Rail 10 weist mehrere Öffnungen 12 auf, die jeweils zur Aufnahme eines Anschlussstutzens 14 ausgebildet sind. Über einen solchen Anschlussstutzen 14 ist das Rail 10 mit einem zur prüfenden Injektor 18 ("Prüfling") verbunden. Der Injektor 18 wird dabei von einer Injektor-Halterung (Injektor-Aufspannvorrichtung) 16 gehalten, die über ein Rohr 20, das sich von dem Tragrahmen 3 ausgehend erstreckt, an dem Tragrahmen 3 abgestützt ist. Die Einzelheiten der Injektor-Halterung 16 werden weiter unten unter Bezugnahme auf die Figuren 3a bis 3c beschrieben.

Durch Schwenken des Schwenkrahmens 22 ist der Winkel des am Rail 10 angebrachten Anschlussstutzens 14 so einstellbar, dass der Anschlussstutzen 14 in einer Linie mit dem Druckrohrstutzen des Injektors 18 ausgerichtet ist. Die Position des Injektors 18 in Bezug auf das Rail 10 kann durch Verstellen der Injektor-Halterung 16 (s.u.) so eingestellt werden, dass der Anschlussstutzen 14 direkt mit dem Druckrohrstutzen des Injektors 18 verbunden werden kann. Auf eine verschleißanfällige flexible Fluidverbindung, z.B. in Form eines Schlauches, zwischen dem Rail 10 und dem Injektor 18 kann daher verzichtet werden.

Der Tragrahmen 3 bildet gemeinsam mit dem Schwenkrahmen 22, dem Motor 8, der Hochdruckpumpe 6 und der Injektor-Halterung 16 eine Baugruppe 9a. Die Baugruppe 9a ist durch elastische Puffer 28, die auf der Unterseite des Tragrahmens 3 angeordnet sind, schwimmend auf einem Gestell 5 der Injektorprüfvorrichtung 2 gelagert. Auf diese Weise werden Schwingungen, die beim Betrieb des Motors 8 und der Fluidpumpe 6 entstehen, nicht oder nur gedämpft auf das Gestell 5 übertragen.

Da die Fluidpumpe 6 mit ihrem Motor 8, das Rail 10 und jeder in einer Injektor-Halterung 16 angeordnete Injektor 18 gemeinsam schwimmend gelagert sind, treten zwischen diesen Bauteilen auch beim Betrieb der Fluidpumpe 6 keine Relativbewegungen auf. Die Fluidpumpe 6 und das Rail 10 können daher durch starre Fluidleitungen 24, die insbesondere aus Stahl ausgebildet sein können, miteinander verbunden werden. Auf den Einsatz verschleißanfälliger flexibler Hochdruckschläuche kann verzichtet werden.

Durch Verwenden starrer Fluidleitungen 24, die insbesondere aus Stahl ausgebildet sind, können die Herstellungs-und Wartungskosten gesenkt werden, und die Betriebssicherheit der Injektorprüfvorrichtung 2 kann erhöht werden.

Die Figuren 3a bis 3c zeigen verschiedene Ansichten der Injektor-Halterung 16 mit einem darin eingeklemmtem Injektor 18.

Der Injektor 18 wird durch eine Klemmvorrichtung 40 in der Injektor-Halterung 16 fixiert. Die Einspritzkammer 42 wird durch Verschieben einer verstellbaren Platte 46 über der (in den Figuren 3a bis 3c nicht sichtbare) Düse des Injektors 18 positioniert und durch Anziehen einer Klemmschraube 45 in dieser Position fixiert.

Über eine teilbare Überwurfmutter 15 am Anschlussstutzen 14 wird der Hochdruckanschluss des Injektors 18 mit dem Rail 10 verbunden.

Durch Schwenken des schwenkbaren Rahmens 22 um die horizontale Achse wird die Injektor-Halterung 16 zuvor dem Anschlussstutzen 14 entsprechend ausgerichtet.

Durch ein Langloch 48, das in einem Träger 54 der Injektor-Halterung 16 ausgebildet ist, kann die Höhe des Injektors 18 verändert und bedarfsgemäß eingestellt werden. Seitliches Spiel im Langloch 48 ermöglicht einen seitlichen Versatz.

Durch Verschieben eines Bolzens 50 in einem Rohr 20 des Tragrahmens 4 (siehe Fig. 2a) kann die Injektor-Halterung 16 vor- und zurück bewegt werden.

Die seitliche Neigung der Injektor-Halterung 16 kann durch den Abstand zwischen einer seitlicher Führung 52 und dem Träger 54 der Injektor-Halterung 16 eingestellt werden.

Die Vor-/ Rückwärtsneigung des Injektors 18 ist über abgerundete Auflagen 56 und die Neigung ausgleichenden Elemente 58, z.B. eine Kombination aus Kugelscheibe und Kegelpfanne, einstellbar.

Über den Bolzen 50 im Rohr 20 des Tragrahmens 3 wird die Injektor-Halterung 16 geführt. Eine Lasche 60 verhindert eine Verdrehung.

Durch Drehen einer Spindel 62, deren Griff in den Figuren nicht gezeigt ist, wird ein Konus 64 so herangezogen, dass er einen Klemmring 66 aufweitet. Der Klemmring 66 verspannt sich dadurch im Rohr 20 des Tragrahmens 3 und ermöglicht es auf diese Weise, die Position der Injektor-Halterung 16 verspannungsfrei zu fixieren.

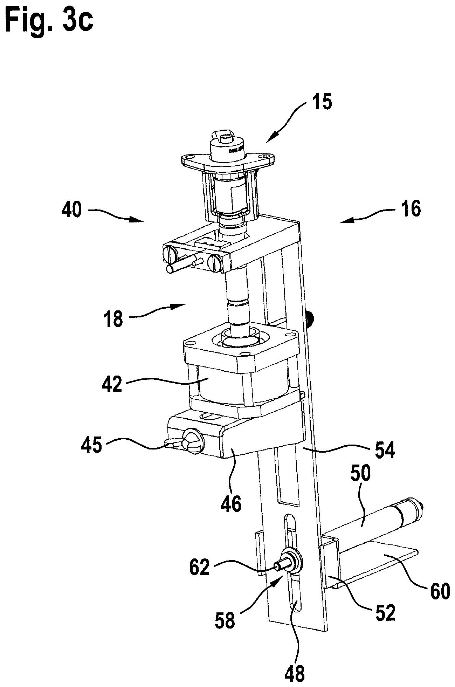

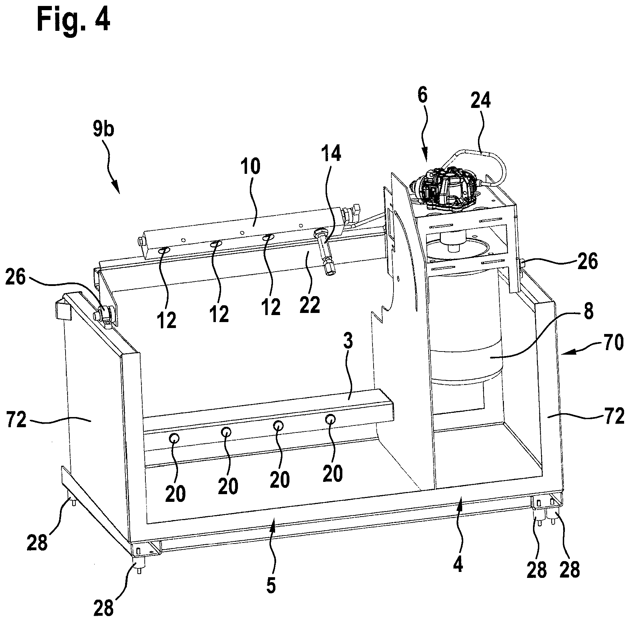

Figur 4 zeigt ein alternatives Ausführungsbeispiel einer Baugruppe 9b. In diesem Ausführungsbeispiel umfasst die Baugruppe 9b eine Ölwanne 70 mit hochgezogenen Seitenteilen 72, die zur Aufnahme der Stehlager 26 des schwenkbaren Rahmens 22 ausgebildet sind. In dem in der Figur 3 gezeigten Ausführungsbeispiel ist die komplette Ölwanne 70 durch Puffer 28 elastisch gelagert.

Anders als in dem in den Figuren 1, 2a und 2b gezeigten Ausführungsbeispiel ist die Rotationsachse des Motors 8 in diesem Fall nicht parallel, sondern rechtwinklig zu Schwenkachse des schwenkbaren Rahmens 22 ausgerichtet. Bei dieser Konstruktion verändert sich daher beim Schwenken des schwenkbaren Rahmens 22 auch die Ausrichtung der Rotationsachse des Motors 8 im Raum.

In einer weiteren, nicht in den Figuren gezeigten und dem beanspruchten Gegenstand nicht gehörenden Konfiguration werden die Fluidpumpe 6 und der Motor 8 am nicht-schwenkbaren, feststehenden Bereich der Vorrichtung 2 angebracht. Um auch in diesem Fall an Stelle flexibler Schläuche starre Fluidleitungen 24 für die Fluidversorgung verwenden zu können, wird ein Fluidadapter 80 in der Drehachse positioniert.

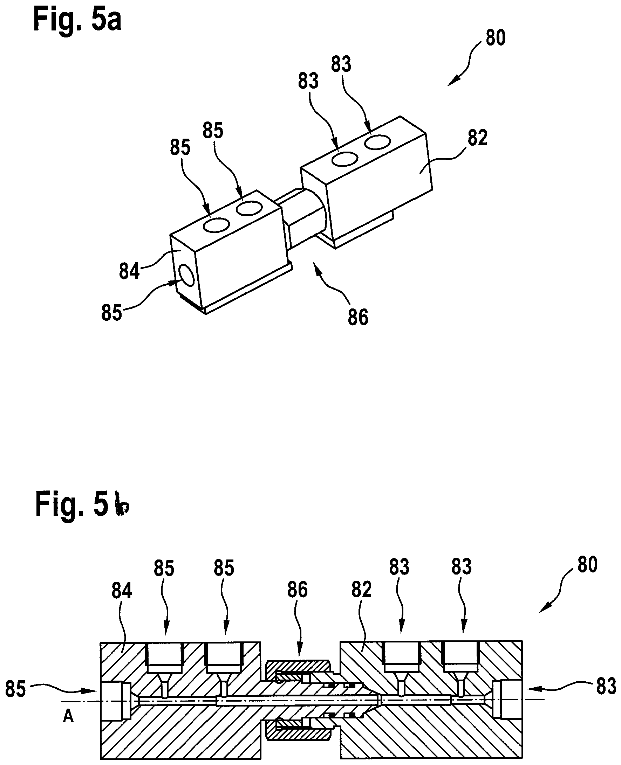

Figur 5a zeigt eine perspektivische Ansicht eines solchen Fluidadapters 80, und Figur 5b zeigt einen Schnitt durch den Fluidadapter 80.

Der Fluidadapter 80 hat ein eingangsseitiges Element 82 und ein ausgangsseitiges Element 84, das so mit dem eingangsseitigen Element 82 verbunden ist, dass es gegenüber dem eingangsseitigen Element 82 um eine Achse A drehbar ist. Sowohl das eingangsseitige Element 82 als auch das ausgangsseitige Element 84 weisen jeweils wenigstens einen Fluidanschluss 83, 85 auf, der es ermöglicht, sowohl eingangsseitig als auch ausgangsseitig Fluidleitungen 24 an den Fluidadapter 80 anzuschließen. Die Verbindung 86 zwischen dem eingangsseitigen Element 82 und dem ausgangsseitigen Element 84 ist auch bei hohem Fluiddruck dicht.

Das eingangsseitige Element 82 des Fluidadapters 80 wird mit dem Ausgang der Fluidpumpe 6 verbunden. Das ausgangsseitige Element 84 des Fluidadapters 80 wird mit dem Rail 10 verbunden. Da das ausgangsseitige Element 84 gegenüber dem eingangsseitigen Element 82 verdrehbar ist, kann eine drehbare Fluidverbindung zwischen der Fluidpumpe 6 und dem Rail 10 auch mit starren Fluidleitungen 24, beispielsweise aus Stahl, realisiert werden.

## Patentansprüche

1. Injektorprüfvorrichtung (2) mit
einer Fluidpumpe (6), die ausgebildet ist, ein Prüföl zu fördern;
einem Motor (4), der mechanisch mit der Fluidpumpe (6) verbunden und ausgebildet ist, die Fluidpumpe (6) anzutreiben;
wenigstens eine Injektor-Halterung (16), die zur Aufnahme wenigstens eines zu prüfenden Injektors (18) ausgebildet ist; und
einem Rail (10), das zur Aufnahme des von der Fluidpumpe (6) geförderten Prüföls und zur Fluidverbindung mit wenigstens einem zu prüfenden Injektor (18) ausgebildet ist;
wobei das Rail (10) gegenüber der wenigstens einen Injektor-Halterung (16) schwenkbar gelagert ist,
**dadurch gekennzeichnet, dass** die Fluidpumpe (6) und der Motor (4) derart gelagert sind, dass sie gemeinsam mit dem Rail (10) schwenkbar sind.

2. Injektorprüfvorrichtung (2) nach Anspruch 1, wobei das Rail (10) um eine horizontale Achse schwenkbar gelagert ist.

3. Injektorprüfvorrichtung (2) nach einem der vorangehenden Ansprüche, wobei das Rail (10) mit wenigstens einem Anschlussstutzen (14) zum Anschließen wenigstens eines zu prüfenden Injektors (18) ausgebildet ist.

4. Injektorprüfvorrichtung (2) nach einem der vorangehenden Ansprüche, wobei die Fluidpumpe (6), der Motor (4) und das Rail (10) als gemeinsame Baugruppe (9a; 9b) elastisch in der Injektorprüfvorrichtung (2) gelagert sind.

5. Injektorprüfvorrichtung (2) nach einem der vorangehenden Ansprüche, wobei der Motor (4) und die Fluidpumpe (6) durch wenigstens einen Puffer (28) elastisch in der Injektorprüfvorrichtung (2) gelagert sind.

6. Injektorprüfvorrichtung (2) nach einem der vorangehenden Ansprüche, wobei die wenigstens eine Injektor-Halterung (16) in wenigstens einer Richtung, insbesondere in allen drei Raumrichtungen, verschiebbar ist.

7. Injektorprüfvorrichtung (2) nach einem der vorangehenden Ansprüche, wobei die wenigstens eine Injektor-Halterung (16) eine Klemmvorrichtung (40) zum Festklemmen eines Injektors (18) umfasst.

8. Injektorprüfvorrichtung (2) nach einem der vorangehenden Ansprüche, wobei die wenigstens eine Injektor-Halterung (16) eine Spindel (62), einen Konus (64) und einen Klemmring (66) umfasst, die derart ausgebildet sind, dass der Klemmring (66) durch Drehen der Spindel (62) aufweitbar ist, um die Injektor-Halterung (16) verspannungsfrei zu fixieren.

## Claims

1. Injector test device (2) having
a fluid pump (6) which is designed to convey a test oil;
a motor (4) which is mechanically connected to the fluid pump (6) and is designed to drive the fluid pump (6) ;
at least one injector holder (16) which is designed to receive at least one injector (18) for testing; and
a rail (10) which is designed to receive the test oil conveyed by the fluid pump (6) and to establish a fluidic connection to at least one injector (18) for testing;
wherein the rail (10) is mounted so as to be pivotable relative to the at least one injector holder (16),
**characterized in that** the fluid pump (6) and the motor (4) are mounted so as to be pivotable jointly with the rail (10).

2. Injector test device (2) according to Claim 1, wherein the rail (10) is mounted so as to be pivotable about a horizontal axis.

3. Injector test device (2) according to either of the preceding claims, wherein the rail (10) is formed with at least one connector piece (14) for the connection of at least one injector (18) for testing.

4. Injector test device (2) according to any of the preceding claims, wherein the fluid pump (6), the motor (4) and the rail (10) are mounted as a common assembly (9a; 9b) in the injector test device (2) in elastic fashion.

5. Injector test device (2) according to any of the preceding claims, wherein the motor (4) and the fluid pump (6) are mounted in the injector test device (2) in elastic fashion by means of at least one buffer (28).

6. Injector test device (2) according to any of the preceding claims, wherein the at least one injector holder (16) is displaceable in at least one direction, in particular in all three spatial directions.

7. Injector test device (2) according to any of the preceding claims, wherein the at least one injector holder (16) comprises a clamping device (40) for fixedly clamping an injector (18).

8. Injector test device (2) according to any of the preceding claims, wherein the at least one injector holder (16) comprises a spindle (62), a cone (64) and a clamping ring (66) which are designed such that the clamping ring (66) can, as a result of rotation of the spindle (62), be expanded in order to fix the injector holder (16) in a distortion-free manner.

## Revendications

1. Dispositif de contrôle d'injecteur (2) comprenant une pompe à fluide (6) qui est réalisée pour refouler une huile de contrôle ;
un moteur (4) qui est connecté mécaniquement à la pompe à fluide (6) et qui est réalisé pour entraîner la pompe à fluide (6) ;
au moins un support de retenue d'injecteur (16) qui est réalisé pour recevoir au moins un injecteur à contrôler (18) ; et
un rail (10) qui est réalisé pour recevoir l'huile de contrôle refoulé par la pompe à fluide (6) et pour établir une liaison fluidique avec au moins un injecteur à contrôler (18) ;
le rail (10) étant supporté de manière à pouvoir pivoter par rapport à l'au moins un support de retenue d'injecteur (16),
**caractérisé en ce que** la pompe à fluide (6) et le moteur (4) sont supportés de telle sorte qu'ils puissent pivoter conjointement avec le rail (10).

2. Dispositif de contrôle d'injecteur (2) selon la revendication 1, dans lequel le rail (10) est supporté de manière à pouvoir pivoter autour d'un axe horizontal.

3. Dispositif de contrôle d'injecteur (2) selon l'une quelconque des revendications précédentes, dans lequel le rail (10) est réalisé avec au moins une tubulure de raccordement (14) pour le raccordement d'au moins un injecteur à contrôler (18).

4. Dispositif de contrôle d'injecteur (2) selon l'une quelconque des revendications précédentes, dans lequel la pompe à fluide (6), le moteur (4) et le rail (10) sont supportés élastiquement dans le dispositif de contrôle d'injecteur (2) en tant que module commun (9a ; 9b).

5. Dispositif de contrôle d'injecteur (2) selon l'une quelconque des revendications précédentes, dans lequel le moteur (4) et la pompe à fluide (6) sont supportés élastiquement dans le dispositif de contrôle d'injecteur (2) par au moins un tampon (28) .

6. Dispositif de contrôle d'injecteur (2) selon l'une quelconque des revendications précédentes, dans lequel l'au moins support de retenue d'injecteur (16) peut être déplacé dans au moins une direction, en particulier dans toutes les trois directions spatiales.

7. Dispositif de contrôle d'injecteur (2) selon l'une quelconque des revendications précédentes, dans lequel l'au moins un support de retenue d'injecteur (16) comprend un dispositif de serrage (40) pour serrer fixement un injecteur (18).

8. Dispositif de contrôle d'injecteur (2) selon l'une quelconque des revendications précédentes, dans lequel l'au moins un support de retenue d'injecteur (16) comprend une broche (62), un cône (64) et une bague de serrage (66) qui sont réalisés de telle sorte que la bague de serrage (66) puisse être élargie par rotation de la broche (62) pour fixer le support de retenue d'injecteur (16) sans serrage.
